Europäisches Patentamt

European Patent Office

Office européen des brevets

(19)

(11) Veröffentlichungsnummer: **0 198 332**
**B1**

# (12) EUROPÄISCHE PATENTSCHRIFT

(45) Veröffentlichungstag der Patentschrift:
07.12.88

(21) Anmeldenummer: 86104506.0

(22) Anmeldetag: 02.04.86

(51) Int. Cl.⁴: **F 23 D 14/22**, F 23 D 14/66,
F 23 D 14/78

(54) Aussenmischender Brenngas-Sauerstoff-Brenner.

(30) Priorität: 11.04.85 DE 3512927

(43) Veröffentlichungstag der Anmeldung:
22.10.86 Patentblatt 86/43

(45) Bekanntmachung des Hinweises auf die Patenterteilung:
07.12.88 Patentblatt 88/49

(84) Benannte Vertragsstaaten:
AT BE DE FR IT

(56) Entgegenhaltungen:
AT-B- 311 531
DE-A- 2 339 563
DE-B- 1 551 767

(73) Patentinhaber: Linde Aktiengesellschaft,
Abraham-Lincoln-Strasse 21, D-6200 Wiesbaden (DE)

(72) Erfinder: Lissack, Wilfried, Dipl.-Ing., Römerstrasse 20a,
D-8023 Pullach (DE)
Erfinder: Czajka, Erich, Dipl.-Ing., Margeritenstrasse 22,
D-8190 Wolfratshausen (DE)
Erfinder: Kulkies, Andreas, Ing. grad., Fichtenstrasse 13,
D-8043 Unterföhring (DE)

(74) Vertreter: Schaefer, Gerhard, Dr., Linde
Aktiengesellschaft Zentrale Patentabteilung,
D-8023 Höllriegelskreuth (DE)

## Beschreibung

Die Erfindung betrifft einen aussenmischenden Brenngas-Sauerstoff-Brenner mit getrennten Kanälen für Brenngas und für Sauerstoff.

Aus dem deutschen Gebrauchsmuster G 81 19 431 ist ein aussenmischender Brenngas-Sauerstoff-Brenner zur Erzeugung einer kurzen, ausreagierten und heissen Flamme bekannt, bei dem die Brenngaskanäle aus einer Vielzahl von parallel zueinander angeordneten, sich nicht berührenden Rohren kleinen Durchmessers bestehen, die Sauerstoffkanäle durch den freien Zwischenraum zwischen den Rohren kleinen Durchmessers gebildet sind und bei dem das Brennermundstück eine Lochplatte mit Bohrungen aufweist, in welche die Rohre kleinen Durchmessers unter Bildung von Ringspalten hineinragen.

Bei einer solchen Konstruktion des Brenners tritt somit das Brenngas am Brennermundstück durch die Rohre kleinen Durchmessers in Einzelstrahlen und der Sauerstoff durch die die Rohre konzentrisch umgebenden Ringspalte aus, wodurch aufgrund der Aufteilung des Brenngases in Einzelstrahlen die Stoffaustauschflächen zwischen Brenngas und Sauerstoff relativ gross gehalten werden können und damit die Ausbildung einer kurzen, ausreagierten und heissen Flamme möglich ist. Durch die Anordnung der Rohre kleinen Durchmessers am Brennermundstück in Bohrungen grösseren Durchmessers ist jedoch die Gefahr gegeben, dass sich die Rohre, beispielsweise bei einem Einsatz des Brenners in einem Induktionsofen, aufgrund der Hitzestrahlung verformen und nicht mehr zentrisch in den die Ringspalte für den Sauerstoffaustritt bildenden Bohrungen angeordnet sind. Damit wird dann die Aufteilung der aus dem Brennermundstück austretenden Brenngas- und Sauerstoffströme gestört, so dass die Ausbildung einer kurzen, ausreagierten und heissen Flamme nicht mehr gewährleistet ist. Abgesehen davon ist die Verwendung jeweils eines Rohres mit kleinem Durchmesser für die Erzeugung einzelner Brenngasstrahlen konstruktionsmässig relativ aufwendig.

Der Erfindung liegt die Aufgabe zugrunde, einen aussenmischenden Brenngas-Sauerstoff-Brenner der eingangs genannten Art so auszugestalten, dass bei einfachem Aufbau des Brenners eine gleichmässige, möglichst feine Mischung der aus dem Brenner ausströmenden Gase und damit eine stabile, über die Betriebszeit des Brenners gleichbleibende Flammenform gewährleistet ist.

Diese Aufgabe wird erfindungsgemäss dadurch gelöst, dass die Kanäle für Sauerstoff und die Kanäle für Brenngas koaxial zueinander ausgebildet sind, der jeweils innenliegende Kanal durch ein im Querschnitt eckiges Zentralrohr gebildet ist und die Eckkanten der Zentralrohre an den Innenwänden der die Zentralrohre aufnehmenden Kanäle anliegen.

Bei diesem Aufbau des Brenners werden die die Zentralrohre aufnehmenden Kanäle durch die Zentralrohre in mehrere koaxial zu der Zentralrohrachse angeordnete Einzelkanäle aufgeteilt, so dass sowohl die zugeführte Sauerstoffmenge als auch die zugeführte Brenngasmenge in viele Einzelstrahlen zerlegt werden kann. Dabei ergibt die Führung der Eckkanten der Zentralrohre an der Innenwand der die Zentralrohre aufnehmenden Kanäle eine unveränderlich gleichmässige Aufteilung des Brenngases und des Sauerstoffs am Brennermundstück, wodurch über die gesamte Betriebszeit des Brenners eine gleichmässig stabile, gut ausgebrannte Flamme mit wenig oder keinem freien Sauerstoff, der ansonsten z.B. beim Beheizen flüssiger Metalle zu Oxidationsprozessen führen könnte, erzeugt wird.

Ausserdem wird infolge der Führung der Zentralrohre ein hoher Saugeffekt in Bezug auf das Brenngas mit der Bildung eines Unterdrucks in den Kanälen für Brenngas erreicht, wenn die Gasströmungsgeschwindigkeit in den Kanälen für Sauerstoff mindestens gleich gross wie in den Kanälen für Brenngas eingestellt wird. Mit der Erhöhung des Saugeffektes wird der effektive Druckunterschied zwischen dem tatsächlich vorhandenen Brenngas-Vordruck und dem Druck, der am Brennermundstück besteht, grösser, wodurch dann die Länge der für die Steuerung des Brenners notwendigen Mess- und Regelstrecken entsprechend kleiner ausgelegt werden kann.

Hinsichtlich der Ausbildung der Zentralrohre ist es vorteilhaft, wenn diese ein zu der Längsachse der die Zentralrohre aufnehmenden Kanäle drehsymmetrisches Querschnittsprofil aufweisen. Die Form und Anzahl der auf der Aussenseite der Zentralrohre in den die Zentralrohre aufnehmenden Kanälen gebildeten Einzelkanälen ist somit von der Querschnittsform der Zentralrohre bestimmt. Die drehsymmetrische Ausbildung des Querschnittsprofils der Zentralrohre gewährleistet dabei, dass die Einzelkanäle jeweils eine gleiche Querschnittsfläche aufweisen, wodurch der Gasaustritt am Brennermundstück gleichmässig erfolgt. Beispielsweise können die Zentralrohre mit einem dreieckigen oder viereckigen Querschnitt ausgebildet sein.

Zweckmässig ist es dabei, die Querschnitte der Zentralrohre und damit die Querschnitte der die Zentralrohre aufnehmenden Kanäle so aufeinander abzustimmen, dass das Mengen- und das Strömungsgeschwindigkeitsverhältnis beider Gase optimal ist. Dabei ist jedoch zu berücksichtigen, welche Brenngase zum Einsatz kommen sollen, da das günstigste Brenngas-Sauerstoff-Verhältnis abhängig ist von der Verwendung von beispielsweise Butan, Propan oder Erdgas als Brenngas.

Zur Vereinfachung der Fertigung des Brenners und zur Erreichung einer guten Durchmischung der am Verbrennungsprozess teilnehmenden Gase ist es weiterhin von Vorteil, wenn die die Zentralrohre aufnehmenden Kanäle einen runden Querschnitt aufweisen. Am Brennermundstück des Brenners umschliessen dann die aus den die Zentralrohre aufnehmenden Kanälen ausströmenden Gase die aus den Zentralrohren ausströmenden Gase nahezu kreisförmig, was die Vermischung günstig beeinflusst. Ausserdem kann das Brennermundstück bei der Fertigung einfach mit Bohrungen versehen werden, in die dann Rohre eingeschweisst werden, die zur Bildung der die Zentralrohre aufnehmenden Kanäle dienen.

Eine weitere vorteilhafte Ausgestaltung des erfindungsgemässen Brenners besteht darin, dass die Zentralrohre mit einer Sauerstoffkammer des Brenners in Verbindung stehen. Damit ergibt sich die Möglichkeit, den bei entsprechender Strömungsgeschwindigkeit des Sauerstoffs infolge der Führung der Zentralrohre in Bezug auf das Brenngas bestehenden Saugeffekt noch dadurch zu erhöhen, dass die Zentralrohre am Brennermundstück nicht bündig mit den die Zentralrohre aufnehmenden Kanälen abschliessen, sondern gegen diese zurückgesetzt sind.

Bei Verwendung der Zentralrohre als Kanäle für Sauerstoff ist es ausserdem von Vorteil, wenn die Sauerstoffkammer mit einer Innenkammer einer dem Brenner zugeordneten Doppelkammer in Verbindung steht, an die Aussenkammer der Doppelkammer eine Zuleitung für Sauerstoff angeschlossen ist und zwischen Aussen- und Innenkammer Gasdurchtrittsöffnungen ausgebildet sind. Die Anordnung der Doppelkammer ermöglicht es, den Brenner sowie die im Brenner eingebauten Einrichtungen zur Flammenüberwachung und Zündung des Brenners durch den zugeführten Sauerstoff zu kühlen und dadurch die Standzeiten des Brenners zu erhöhen. Zweckmässigerweise erstreckt sich dabei die Aussenkammer der Doppelkammer im wesentlichen sowohl über die gesamte Länge als auch über den Umfang des Brenners, um so eine möglichst weitgehende Umströmung des Brenners mit Sauerstoff zu erhalten. Einhergehend mit der Kühlung des Brenners ergibt sich auf diese Weise auch eine gleichmässige Vorwärmung des zugeführten Sauerstoffs, wodurch der thermische Wirkungsgrad des Brenners verbessert wird.

Zur Erhöhung der Brennerkühlung und der Vorwärmung des Sauerstoffs ist es ausserdem von Vorteil, wenn die Gasdurchtrittsöffnungen im dem Brennermundstück zugeordneten Endbereich der Doppelkammer und der Anschluss der Zuleitung für Sauerstoff im vom Brennermundstück entfernten Endbereich der Doppelkammer vorhanden sind. Dadurch kann das Sauerstoffgas in dem Bereich des Brenners zugeführt werden, in dem in der Regel die Einrichtungen zur Flammenüberwachung und Zündung des Brenners angeordnet sind, so dass diese besonders gekühlt werden können. Darüber hinaus wird eine gleichmässige Sauerstoffdurchströmung der Aussenkammer über die ganze Länge des Brenners und damit eine regelmässige Kühlung des Brenners sichergestellt.

Die Innenkammer der Doppelkammer ist zweckmässigerweise so ausgeführt, dass sie den neben der Sauerstoffkammer, der Brenngaskammer und den Brenngaskanälen verbleibenden Innenbereich des Brenners bildet. Damit kann dann auch der Bereich des Brennermundstücks durch den in die Innenkammer einströmenden Sauerstoff gekühlt werden.

Der erfindungsgemässe Brenngas-Sauerstoff-Brenner kann auf vielen technischen Gebieten eingesetzt werden, beispielsweise zum Vorwärmen, z.B. von Pfannen zur Wärmebehandlung oder zum Einschmelzen beispielsweise in Herdöfen, Drehtrommelöfen oder Konvertern oder in Induktionsöfen als Zusatzbrenner.

Ein Ausführungsbeispiel eines erfindungsgemässen Brenngas-Sauerstoff-Brenners ist in der Zeichnung schematisch dargestellt.

Es zeigen:

Figur 1 die generelle Ausbildung eines Brenngas-Sauerstoff-Brenners mit der koaxialen Anordnung von als Sauerstoffkanälen verwendeten Zentralrohren in Brenngaskanälen,

Figur 2a einen Querschnitt durch einen Brenngaskanal mit einem viereckigen Zentralrohr,

Figur 2b einen Querschnitt durch einen Brenngaskanal mit einem dreieckigen Zentralrohr.

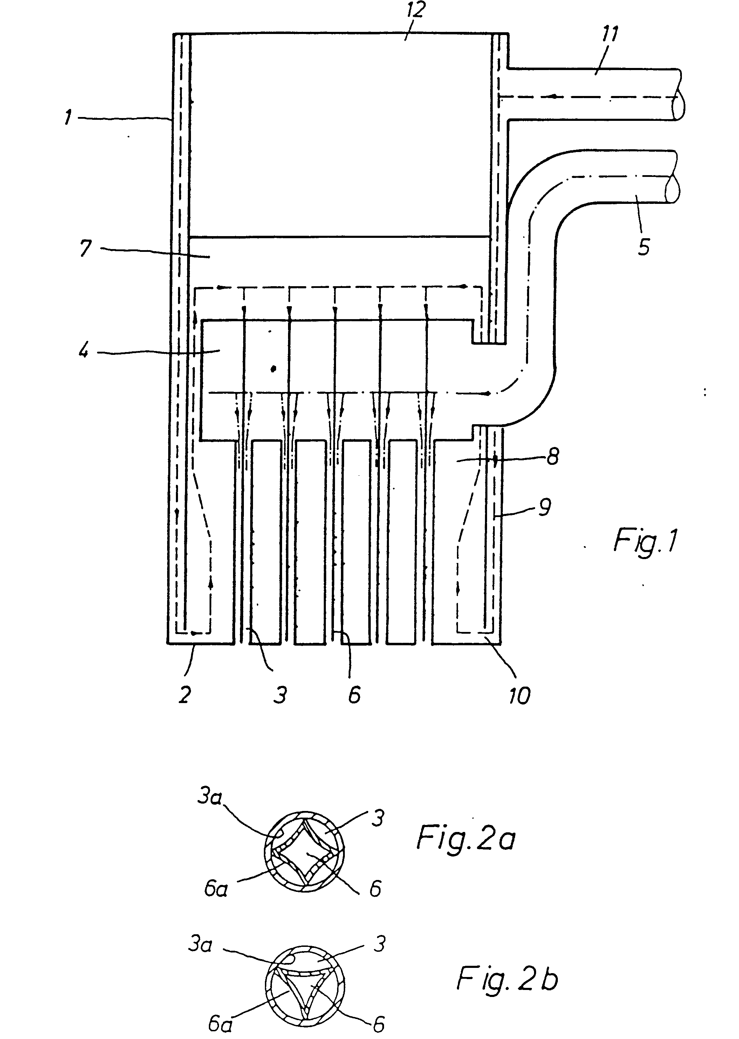

In der Figur 1 ist mit 1 ein Brenngas-Sauerstoff-Brenner bezeichnet, der ein Brennermundstück 2 sowie Kanäle 3 für Brenngas und Kanäle 6 für Sauerstoff aufweist. Die Kanäle 3 für Brenngas sind an eine im Inneren des Brenners 1 ausgebildete Brenngaskammer 4 angeschlossen, der eine Brenngaszuleitung 5 zugeordnet ist. Die Kanäle 6 für Sauerstoff sind an eine ebenso im Inneren des Brenners 1 ausgebildete Sauerstoffkammer 7 angeschlossen, die vom Brennermundstück 2 ausgesehen hinter der Brenngaskammer 4 liegt. Hinter der Sauerstoffkammer 7 ist am dem Brennermundstück 2 gegenüberliegenden Ende des Brenners 1 eine Kammer 12 für Flammenüberwachungselemente sowie Zündelemente ausgebildet.

Der Umfang des Brenners 1 ist auf der gesamten Länge von einer Aussenkammer 9 umgeben, an die auf der Höhe der Kammer 12 für die Überwachungs- und Zündelemente eine Zuleitung 11 für Sauerstoff angeschlossen ist. Im Bereich des Brennermundstücks 2 steht die Aussenkammer 9 über Gasdurchtrittsöffnungen 10 mit einer Innenkammer 8 in Verbindung, die ihrerseits mit der Sauerstoffkammer 7 in Verbindung steht. Die Innenkammer 8 bildet dabei den Raum zwischen Brennermundstück 2 und Brenngaskammer 4. Wie durch in der Figur 1 eingetragene gestrichelte Pfeile angedeutet ist, wird bei diesem Aufbau des Brenners 1 der über die Zuleitung 11 zugeführte Sauerstoff durch die Aussenkammer 9 entlang dem Brennerumfang vom hinteren Ende des Brenners 1 zum Brennermundstück 2 geleitet, wo er dann durch die Gasdurchtrittsöffnungen 10 in die Innenkammer 8 überströmt. In der Innenkammer 8 strömt der Sauerstoff in entgegengesetzter Richtung zur Sauerstoffkammer 7. Auf diese Weise ist zum einen mit Hilfe des Sauerstoffs eine gute Kühlung des gesamten Brennergehäuses möglich und zum anderen wird gleichzeitig eine gleichmässige Vorwärmung des zur Verbrennung zugeführten Sauerstoffs und damit eine Erhöhung des thermischen Wirkungsgrades des Verbrennungsprozesses erreicht.

Die an die Sauerstoffkammer 7 angeschlossenen Kanäle 6 für Sauerstoff sind als Zentralrohre 6a ausgebildet, die koaxial in den Kanälen 3 für Brenngase angeordnet sind. Die Zentralrohre 6a durchstossen somit die Brenngaskammer 4. Die Kanäle 3 für Brenngas sind der Einfachheit halber auch als parallele Rohre ausgebildet, die die Innenkammer 8 durchstossen und in Bohrungen des Brennermundstücks 2 sowie in Bohrungen der Brenngaskammer 4 eingeschweisst sind. Die Anordnung dieser Rohre ist dabei zweckmässigerweise regelmässig zu wählen, um ausserhalb des Brennermundstücks 2 eine möglichst gleichmässige Gasmischung zu erhalten.

Die Zentralrohre 6a sind, wie in den Figuren 2a und 2b dargestellt ist, im Querschnitt eckig ausgebildet, wobei die Eckkanten der Zentralrohre 6a an den Innenwänden 3a der die Zentralrohre 6a aufnehmenden Kanäle 3 für Brenngas anliegen. Die Zentralrohre 6a weisen dabei zweckmässigerweise ein zur Längsachse der die Zentralrohre 6a aufnehmenden Kanäle 3 drehsymmetrisches Querschnittprofil auf, um gleichmässige Querschnittsflächen der ausserhalb der Zentralrohre 6a in den Kanälen 3 ausgebildeten Einzelkanäle und damit eine gleichmässige Brenngasverteilung um die Zentralrohre 6a zu erhalten. In den Figuren 2a und 2b sind als drehsymmetrische Querschnittprofile der Zentralrohre 6a Dreiecke und Vierecke dargestellt. Das erforderliche Brenngas-Sauerstoff-Verhältnis, das vom verwendeten Brenngas abhängig ist, bestimmt dabei das Querschnittsverhältnis der Zentralrohre 6a zu den Einzelkanälen der Brenngaskanäle 3, wodurch dann letztlich auch das Profil der Zentralrohre 6a bestimmt ist.

Die Führung der Zentralrohre 6a mit ihren Eckkanten an den Innenwänden 3a der Brenngaskanäle 3 ergibt eine unveränderlich gleichmässige Aufteilung des Brenngases und des Sauerstoffs am Brennermundstück 2, wodurch über die gesamte Betriebszeit des Brenners 1 eine gleichmässige stabile, gut ausgebrannte Flamme erzeugt wird.

Um eine erhöhte Saugwirkung des den Zentralrohren 6a entströmenden Sauerstoffs auf das Brenngas zu erhalten, ist es zweckmässig, die Zentralrohre nicht bündig mit dem Brennermundstück 2 abschliessen zu lassen, sondern gegen dieses zurückzusetzen.

Anstelle der dargestellten Ausführungsform besteht auch die Möglichkeit, die Brenngaskammer und die Sauerstoffkammer zu vertauschen und das Brenngas in den Zentralrohren und den Sauerstoff in den die Zentralrohre umgebenden Kanälen ausströmen zu lassen. Allerdings ist dabei die Kühlung des Brennergehäuses weniger effektiv, da die Durchflussmenge des Brenngases kleiner als die Durchflussmenge des Sauerstoffs ist.

## Patentansprüche

1. Aussenmischender Brenngas-Sauerstoff-Brenner mit Kanälen für Brenngas und für Sauerstoff, dadurch gekennzeichnet, dass die Kanäle für Sauerstoff und die Kanäle für Brenngas koaxial zueinander ausgebildet sind, der jeweils innen liegende Kanal (6) durch ein im Querschnitt eckiges Zentralrohr (6a) gebildet ist und die Eckkanten der Zentralrohre (6a) an den Innenwänden (3a) der die Zentralrohre (6a) aufnehmenden Kanäle (3) anliegen.

2. Aussenmischender Brenngas-Sauerstoff-Brenner nach Anspruch 1, dadurch gekennzeichnet, dass die Zentralrohre (6a) ein zu der Längsachse der die Zentralrohre (6a) aufnehmenden Kanäle (3) drehsymmetrisches Querschnittprofil aufweisen.

3. Aussenmischender Brenngas-Sauerstoff-Brenner nach Anspruch 1 oder 2, dadurch gekennzeichnet, dass die die Zentralrohre (6a) aufnehmenden Kanäle (3) einen runden Querschnitt aufweisen.

4. Aussenmischender Brenngas-Sauerstoff-Brenner nach einem der Ansprüche 1 bis 3, dadurch gekennzeichnet, dass die Zentralrohre (6a) mit einer Sauerstoffkammer (7) des Brenners (1) in Verbindung stehen.

5. Aussenmischender Brenngas-Sauerstoff-Brenner nach Anspruch 4, dadurch gekennzeichnet, dass die Sauerstoffkammer (7) mit einer Innenkammer (8) einer dem Brenner (1) zugeprdneten Doppelkammer (8, 9) in Verbindung steht, an die Aussenkammer (9) der Doppelkammer (8, 9) eine Zuleitung (11) für Sauerstoff angeschlossen ist und zwischen Aussenkammer (9) und Innenkammer (8) Gasdurchtrittsöffnungen (10) ausgebildet sind.

6. Aussenmischender Brenngas-Sauerstoff-Brenner nach Anspruch 5, dadurch gekennzeichnet, dass die Gasdurchtrittsöffnungen (10) im dem Brennermundstück (2) zugeordneten Endbereich der Doppelkammer (8, 9) und der Anschluss der Zuleitung (11) für Sauerstoff im vom Brennermundstück (2) entfernten Endbereich der Doppelkammer (8, 9) vorhanden sind.

## Claims

1. An externally mixing fuel gas-oxygen burner having channels for fuel gas and for oxygen, characterised in that the channels for oxygen and the channels for fuel gas are so designed as to be coaxial with one another, the inner channel (6) in each case being formed by a central pipe (6a) of angular cross-section, and the angle edges of the central pipes (6a) abutting against the inner walls (3a) of the channels (3) which accommodate the central pipes (6a).

2. An externally mixing fuel gas-oxygen burner as claimed in Claim 1, characterised in that the central pipes (6a) have a cross-sectional profile which is axially symmetrical with respect to the longitudinal axes of the channels (3) which accommodate the central pipes (6a).

3. An externally mixing fuel gas-oxygen burner as claimed in Claim 1 or 2, characterised in that the channels (3) which accommodate the central pipes (6a) have a circular cross-section.

4. An externally mixing fuel gas-oxygen burner as claimed in one of Claims 1 to 3, characterised in that the central pipes (6a) are connected to an oxygen chamber (7) of the burner (1).

7 EP 0198332 B1 8

5. An externally mixing fuel gas-oxygen burner as claimed in Claim 4, characterised in that the oxygen chamber (7) is connected to an inner chamber (8) of a double chamber (8, 9) which is assigned to the burner (1), the outer chamber (9) of the double chamber (8, 9) being connected to a supply pipe (11) for oxygen, and gas openings (10) being formed between the outer chamber (9) and the inner chamber (8).

6. An externally mixing fuel gas-oxygen burner as claimed in Claim 5, characterised in that the gas openings (10) are arranged in the end region of the double chamber (8, 9) which is assigned to the burner tip (2), and the connection of the supply pipe (11) for oxygen being arranged in the end region of the double chamber (8, 9) which is remote from the burner tip (2).

**Revendications**

1. Brûleur à mélange extérieur pour un gaz combustible et de l'oxygène, comportant des canaux pour le gaz combustible et l'oxygène, caractérisé en ce que les canaux pour l'oxygène et les canaux pour le gaz combustible sont coaxiaux, chaque canal situé à l'intérieur (6) présentant un profil angulaire et formant un tuyau central (6a) et en ce que les arêtes d'angle du canal (6a) se raccordent aux parois intérieures (3a) des canaux (3) entourant les tuyaux centraux (6a).

2. Brûleur selon la revendication 1, caractérisé en ce que les tuyaux centraux (6a) présentent un profil symétrique par rapport à un axe de révolution qui est l'axe transversal des canaux (3) qui entourent les tuyaux centraux (6a).

3. Brûleur selon la revendication 1 ou 2, caractérisé en ce que les canaux (3) entourent les tuyaux centraux (6a) présentent une section arrondie.

4. Brûleur selon une des revendications 1 à 3, caractérisé en ce que les tuyaux centraux (6a) sont reliés à une chambre à oxygène (7) du brûleur (1).

5. Brûleur selon la revendication 4, caractérisé en ce que la chambre à oxygène (7) reliée à la chambre intérieure (8) d'une chambre double (8, 9) associée au brûleur, en ce que la chambre externe (9) de la chambre double (8, 9) a une entrée pour l'amenée (11) d'oxygène et en ce que des ouvertures de passage (10) de gaz sont ménagées entre la chambre extérieure (9) et la chambre intérieure (8).

6. Brûleur selon la revendication 5, caractérisé en ce que les ouvertures de passage de gaz (10) sont ménagées dans la zone terminale des chambres doubles (8, 9) voisine de l'embouchure de brûleur (2) et en ce que l'arrivée (11) d'oxygène est disposée dans la zone terminale de la chambre double (8, 9) qui est éloignée de l'embouchure de brûleur (2).

5

EP 0 198 332 B1

Fig.1

Fig.2a

Fig.2b